# EUROPÄISCHE PATENTSCHRIFT

(11) **EP 3 622 201 B1**
(45) Veröffentlichungstag und Bekanntmachung des Hinweises auf die Patenterteilung: **17.11.2021**
(21) Anmeldenummer: 18718413.0
(22) Anmeldetag: 10.04.2018
(51) Int. Cl.: F16H 57/08, F16H 57/00, B60G 21/055

(54) **PLANETENGETRIEBE UND SCHWENKMOTOR EINES WANKSTABILISATORS MIT PLANETENGETRIEBE**
PLANETARY TRANSMISSION, AND SWIVEL MOTOR OF A ROLL STABILIZER HAVING A PLANETARY TRANSMISSION
BOÎTE DE VITESSES À TRAINS ÉPICYCLOÏDAUX ET MOTEUR PIVOTANT D'UN STABILISATEUR ANTIROULIS COMPRENANT UNE BOÎTE DE VITESSES À TRAINS ÉPICYCLOÏDAUX

(30) Priorität: 08.05.2017 DE 102017207697
(43) Veröffentlichungstag der Anmeldung: 18.03.2020
(73) Patentinhaber: ZF Friedrichshafen AG, 88046 Friedrichshafen (DE)
(72) Erfinder: SCHWARZE, Rene, 49434 Vörden (DE); MAIR, Ulrich, 88046 Friedrichshafen (DE)
(74) Vertreter: ZF Friedrichshafen AG
(86) Internationale Anmeldenummer: PCT/EP2018/059090
(87) Internationale Veröffentlichungsnummer: WO 2018/206206

(56) Entgegenhaltungen:
- WO-A2-03/004908
- DE-A1-102012 207 250
- DE-A1-102014 205 261

## Beschreibung

Die Erfindung betrifft ein Planetengetriebe nach dem Oberbegriff des Patentanspruches 1 sowie einen Schwenkmotor eines aktiven Wankstabilisators nach dem Oberbegriff des Patentanspruches 7.

Aus WO 03/004908 A2 ist ein Planetengetriebe gemäß den Merkmalen des Oberbegriffs des Patentanspruchs 1 bekannt. Der Planetenträger weist eine erste Sorte von Bohrungen auf, die auf einem ersten Lochkreis mit einem ersten Radius liegen, und weist eine zweite Sorte von Bohrungen auf, die auf einem Lochkreis mit einem zweiten, davon abweichenden Radius, liegen. Gemäß dortigem Anspruch 14 können die Bohrungen einer Sorte exzentrisch ausgeführt sein. Es werden entweder die Bohrungen des ersten Lochkreises mit Planetenbolzen und darauf gelagerten Planeten bestückt, oder es werden die Bohrungen des zweiten Lochkreises mit Planetenbolzen und darauf gelagerten Planeten bestückt. Durch die zwei Sorten von am Planetenträger vorgesehenen Bohrungen lässt sich derselbe Planetenträger für unterschiedliche Übersetzungen oder Baugrößen (Varianten) verwenden, wodurch sich niedrige Fertigungs- und Lagerkosten (der Planetenträger ist ein Gleichteil) ergeben.

Bei Planetengetrieben, welche grundsätzlich ein Sonnenrad, Planetenräder, welche gegenüber einem Planetenträger, auch Steg genannt, gelagert sind, sowie ein Hohlrad aufweisen, stehen die Planetenräder, auch kurz Planeten genannt, einerseits mit dem Sonnenrad und andererseits mit dem Hohlrad in Zahneingriff. Bei einem Drehrichtungswechsel kann es aufgrund eines Spiels im Zahneingriff zu akustischen Auffälligkeiten oder unerwünschten Geräuschen kommen.

Man hat daher - wie aus der DE 10 2012 207 250 A1 bekannt wurde - bereits vorgeschlagen, zumindest eines der Planetenräder radial verschiebbar anzuordnen und mit einem Federelement zu belasten. Das federbelastete Planetenrad ist dabei durch eine Führungseinrichtung, vorzugsweise einen Schwenkhebel in radialer Richtung auf einer Kreisbahn zwangsgeführt. Damit wird insbesondere das Spiel im Zahneingriff zwischen Planetenrad und Hohlrad minimiert. Das Federelement, welches das Planetenrad in radialer Richtung nach außen, d. h. in Richtung Hohlrad drückt, ist vorzugsweise als Schraubenfeder ausgebildet, wobei die Wirkungsrichtung der Schraubenfeder tangential zum Sonnenrad erfolgt.

Es ist ferner bekannt, Planetengetriebe in Schwenkmotoren eines Wankstabilisators für Kraftfahrzeuge einzusetzen. Durch die DE 10 2014 205 261 A1 wurde ein Schwenkmotor eines aktiven Wankstabilisators bekannt, welcher einen Elektromotor und ein mehrstufiges Planetengetriebe zur Reduktion der Motordrehzahl und zur Erhöhung des Motordrehmoments umfasst. Der Schwenkmotor ist an beiden Stirnenden jeweils mit einer Stabilisatorhälfte verbunden und kann somit entgegengesetzte Drehmomente auf die Stabilisatorhälften ausüben. Auch bei einem solchen Planetengetriebe in einem Schwenkmotor erfolgt im Betrieb ein Drehrichtungswechsel, so dass ein so genanntes Umschlagspiel in den einzelnen Zahneingriffen auftreten kann.

Eine Aufgabe der Erfindung besteht darin, ein Spiel bzw. Flankenschlagen im Planetengetriebe zu vermeiden oder zumindest zu reduzieren.

Die Erfindung umfasst die Merkmale der unabhängigen Patentansprüche 1 und 7. Vorteilhafte Ausgestaltungen ergeben sich aus den Unteransprüchen.

Nach einem ersten Aspekt der Erfindung ist bei einem Planetengetriebe, bei welchem die Bohrungen für die Planetenbolzen auf einem gemeinsamen, regulären symmetrischen Lochkreis angeordnet sind, zumindest eine Bohrung als exzentrische Bohrung ausgebildet ist, d. h., der Mittelpunkt der exzentrischen Bohrung, genannt exzentrischer Mittelpunkt, ist gegenüber dem regulären Mittelpunkt des symmetrischen Lochkreises in radialer und/oder in tangentialer Richtung versetzt angeordnet. Durch diese exzentrische Anordnung zumindest einer Bohrung, eines Planetenbolzens und des darauf gelagerten Planeten entsteht eine Verklemmung im Zahneingriff zwischen Planeten und Sonnenrad und/oder dem Hohlrad. Dadurch wird ein Spiel zwischen den Zähnen beseitigt oder reduziert.

Nach einer bevorzugten Ausführungsform sind die Planetenbolzen beidseitig im Planetenträger abgestützt, d. h. ein Ende des Planetenbolzens steckt in einer ersten Bohrung und das andere Ende in einer zweiten Bohrung, welche koaxial zur ersten Bohrung angeordnet ist. Damit ist eine biegesteife Abstützung des Planetenbolzens und des Planeten gegeben.

Erfindungsgemäß weist die exzentrische Bohrung entweder einen größeren Durchmesser als die übrigen Bohrungen auf, in welchen die Planetennbolzen mittels einer Presspassung oder Überganspassung gefügt sind. Durch die exzentrische Bohrung mit vergrößertem Durchmesser ergibt sich ein Radialspiel zwischen Planetenbolzen und der exzentrischen Bohrung, so dass der Planetenbolzen sowohl in Radial- als auch in Tangentialrichtung beweglich ist. Alternativ oder ergänzend kann erfindungsgemäß die exzentrische Bohrung auch als Langloch ausgeführt sein, um ebenfalls eine Beweglichkeit des Planetenbolzens zu ermöglichen, wobei die Beweglichkeit in Abhängigkeit von der Ausrichtung des Langloches gegeben ist. So ergibt sich eine Radialbeweglichkeit, wenn das Langloch radial ausgerichtet ist, d.h. annähernd oder genau parallel zu einem gedachten Radius, der von der Mitte des Planetenträgers radial auswärts ragt.

Erfindungsgemäß ist der Planetenbolzen in der exzentrischen Bohrung elastisch und/oder dämpfend gelagert. Damit wird eine Entkoppelung des Planetenbolzens gegenüber dem Planetenträger erreicht, wobei die Bewegung des Planetenbolzens innerhalb des Radialspiels durch geeignete Mittel abgefedert und/oder gedämpft wird. Damit werden ebenfalls Geräusche reduziert bzw. vermieden.

Erfindungsgemäß ist der Planetenbolzen gegenüber der exzentrischen Bohrung über elastisch verformbare Ringe abgestützt. Die elastischen Ringe sind in der Lage, Radial- und Tangentialbewegungen des Planetenbolzens durch elastische Verformung zu kompensieren.

Nach einer bevorzugten Ausführungsform sind in den exzentrischen Bohrungen Ringnuten zur Aufnahme des elastischen Ringes angeordnet. Die elastischen Ringe werden in die Ringnuten eingelegt und dadurch in axialer Richtung fixiert. Beim Einsetzen der Planetenbolzen in die exzentrischen Bohrungen erfolgt eine Pressung zwischen dem elastischen Ring und dem Umfang des Planetenbolzens.

Nach einer weiteren bevorzugten Ausführungsform ist zwischen dem Planetenbolzen und der exzentrischen Bohrung ein ringförmiges Federdämpfungsglied angeordnet, welches vorzugsweise als Rundschnurrring aus einem elastomeren Material ausgebildet ist. Das Elastomer hat die Eigenschaft, dass es sowohl als Feder- als auch als Dämpfungselement wirkt.

Nach einer weiteren bevorzugten Ausführungsform ist der elastische Ring als metallisches Radial-Wellfeder-Element ausgebildet, d. h. als Metallstreifen mit einer in Umfangsrichtung verlaufenden Wellung. Das Radial-Wellfeder-Element liegt also einerseits mit Wellenbergen am Grund der Ringnut und andererseits mit den versetzten Wellenbergen am Planetenbolzen an. Damit kann der Planetenbolzen elastisch gegenüber der exzentrischen Bohrung in radialer und/oder tangentialer Richtung ausweichen. Damit wird auch eine Vorspannung in den Zahneingriffen zwischen Planeten, Sonnenrad und Hohlrad erreicht.

Nach einem weiteren Aspekt der Erfindung ist bei einem Schwenkmotor eines aktiven Wankstabilisators vorgesehen, dass ein Planetengetriebe der zuvor erläuterten Art verwendet wird, d. h. ein Planetengetriebe, bei welchem die Planeten respektive ihre Planetenbolzen teilweise exzentrisch gegenüber dem regulären symmetrischen Lochbild angeordnet sind. Damit wird bei einem Drehrichtungswechsel im Planetengetriebe ein Getriebespiel vermieden. Bei mehrstufigen Planetengetrieben, welche mehrere hintereinander geschaltete Radsätze oder einzelne Planetengetriebe aufweisen, kann die erfindungsgemäße exzentrische Bolzenlagerung bei einer oder mehreren Stufen vorteilhaft eingesetzt werden.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: eine Ansicht in axialer Richtung auf einen Planetenträger eines Planetengetriebes,
- Fig. 2: einen vergrößerten Schnitt in der Ebene II-II in Fig. 1,
- Fig. 3: eine 3D-Darstellung des Planetenträgers und
- Fig. 4: ein Radial-Wellfeder-Element.

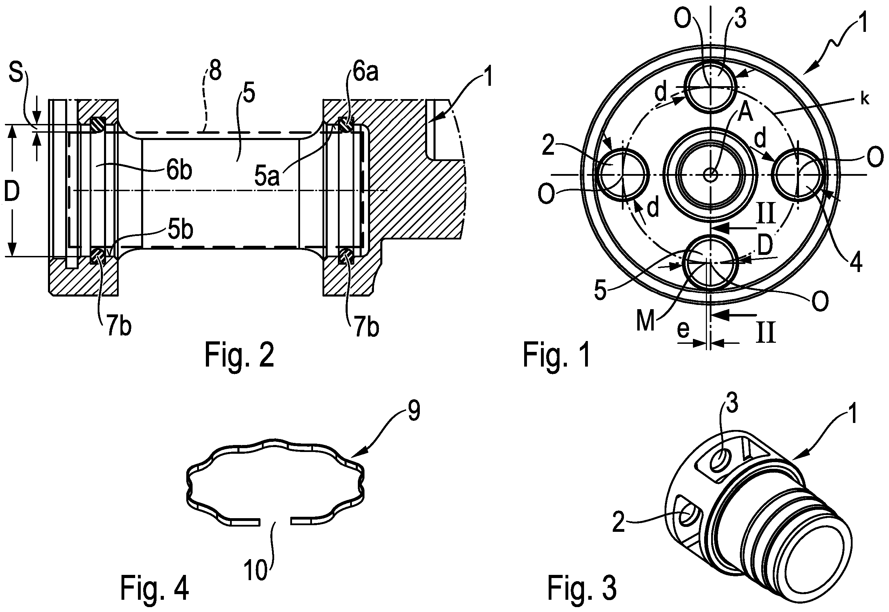

Fig. 1 zeigt einen Planetenträger 1 mit vier über den Umfang verteilt angeordneten Bohrungen 2, 3, 4, 5, welche zur Aufnahme von hier nicht dargestellten Planetenbolzen dienen. Die Bohrungen 2, 3, 4 weisen jeweils Mittelpunkte O auf, welche auf einem gemeinsamen Lochkreis k um den Achspunkt A und jeweils um 90 Grad gegeneinander versetzt angeordnet sind. Unter Achspunkt A wird der Durchstoßpunkt der Drehachse des Planetenträgers 1 durch die Zeichenebene verstanden. Die vierte Bohrung 5 weist einen Mittelpunkt M auf, welcher gegenüber dem regulären, d. h. auf dem Lochkreis k um 90 Grad versetzt angeordneten Mittelpunkt O um eine Exzentrizität e versetzt ist, die hier vergrößert in tangentialer Richtung dargestellt ist. Der exzentrische Mittelpunkt M kann gegenüber dem regulären Mittelpunkt O auch in radialer Richtung, d. h. in Richtung auf den Achspunkt A des Planetenträgers 1 oder sowohl in radialer als auch in tangentialer Richtung versetzt angeordnet sein. Die exzentrische Bohrung 5 weist einen Durchmesser D auf, welcher größer als der Durchmesser d der Bohrungen 2, 3, 4 ist.

Nach einem bevorzugten Ausführungsbeispiel beträgt der Durchmesser der exzentrischen Bohrung 5 D = 16 mm, während der Durchmesser der übrigen Bohrungen 2, 3, 4 d = 15 mm beträgt. Die Exzentrizität beträgt etwa e = 0,1 mm.

Fig. 2 zeigt einen vergrößerten Schnitt in der Ebene II-II in Fig. 1, d. h. durch die exzentrische Bohrung 5, welche aus einer Sacklochbohrung 5a und einer Durchgangsbohrung 5b im Planetenträger 1 besteht. In den beiden Bohrungen 5a, 5b sind jeweils Ringnuten 6a, 6b angeordnet, welche der Aufnahme von Rundschnurringen 7a, 7b, auch O-Ringe 7a, 7b genannt, dienen. Innerhalb der beiden O-Ringe 7a, 7b ist ein in gestrichelten Linien dargestellter Planetenbolzen 8 angeordnet, wobei zwischen dem Umfang des Planetenbolzen 8 und den beiden O-Ringen 7a, 7b eine Pressung besteht. Der Planetenbolzen 8 ist somit spielfrei, jedoch in radialer Richtung im Rahmen eines Radialspiels s beweglich, und elastisch in den beiden Bohrungen 5a, 5b des Planetenträgers 1 abgestützt. Die O-Ringe 7a, 7b, die aus einem Elastomer bestehen, wirken als Federdämpfungselemente. Auf dem Planentenbolzen 8 ist - was nicht dargestellt ist - in bekannter Weise ein Planetenrad, kurz Planet genannt, drehbar, vorzugsweise mittels eines Nadellagers gelagert. Der Planet greift ebenso wie die übrigen auf dem Umfang angeordneten Planeten einerseits in ein nicht dargestelltes Hohlrad und andererseits in ein nicht dargestelltes Sonnenrad ein, womit das Planetengetriebe vollständig ist. Die Anzahl der Planeten beträgt im dargestellten Ausführungsbeispiel vier, es können jedoch auch drei oder mehr als vier Planeten sein.

Fig. 3 zeigt schematisch den Planetenträger 1 in einer 3D-Darstellung, wobei zwei Bohrungen 2, 3 erkennbar sind.

Fig. 4 zeigt eine Alternative zu den in Fig. 2 dargestellten Rundschnurringen 7a, 7b, nämlich ein Radial-Wellfeder-Element 9, welches auf seinem Umfang einen Schlitz 10 aufweist. Das Radial-Wellfeder-Element 9 ist vorzugsweise aus einem Metall, insbesondere Stahl herstellbar und verfügt aufgrund der auf dem Umfang angeordneten Wellung über eine radiale Elastizität. Das Radial-Wellfeder-Element 9 kann in die in Fig. 2 dargestellten Ringnuten 6a, 6b eingesetzt werden und stützt damit den Planetenbolzen 8 (Fig. 2) elastisch gegenüber dem Planetenträger 1 ab.

Das oben beschriebene Planetengetriebe mit dem erfindungsgemäßen Planetenträger 1 wird vorzugsweise in einem Schwenkmotor einer aktiven Wankstabilisierung verwendet - hierzu wird auf den eingangs genannten Stand der Technik verwiesen. Die elastische, selbstzentrierende Abstützung des Planetenbolzens 8 (Fig. 2) respektive des darauf gelagerten Planeten wirkt sich vorteilhaft, insbesondere Geräusch dämpfend auf ein Zahneingriffsspiel im Planetengetriebe aus.

### Bezugszeichen

- 1: Planetenträger
- 2: erste Bohrung
- 3: zweite Bohrung
- 4: dritte Bohrung,
- 5: Bohrung, exzentrische
- 5a: Sacklochbohrung
- 5b: Durchgangsbohrung
- 6a: erste Ringnut
- 6b: zweite Ringnut
- 7a: erster O-Ring
- 7b: zweiter O-Ring
- 8: Planetenbolzen
- 9: Radial-Wellfeder-Element
- 10: Schlitz

- A: Achspunkt
- d: Durchmesser Bohrung 2,3, 4
- D: Durchmesser Bohrung 5
- e: Exzentrizität
- k: Lochkreis
- M: exzentrischer Mittelpunkt
- O: regulärer Mittelpunkt
- s: Radialspiel

## Patentansprüche

1. Planetengetriebe, umfassend einen Planetenträger (1), mindestens drei auf Planetenbolzen (8) gelagerte Planetenräder, ein Hohlrad sowie ein Sonnenrad, wobei der Planetenträger (1) auf einem gemeinsamen Lochkreis (k) angeordnete Bohrungen (2, 3, 4) mit gleichmäßig über den Umfang verteilten regulären Mittelpunkten (O) zur Aufnahme der Planetenbolzen (8) aufweist, **dadurch gekennzeichnet, dass** mindestens eine Bohrung als exzentrische Bohrung (5), deren exzentrischer Mittelpunkt (M) in radialer und/oder tangentialer Richtung gegenüber dem regulären Mittelpunkt (O) versetzt angeordnet ist, ausgebildet ist, derart dass durch die exzentrische Anordnung der zumindest einen Bohrung (5), eines Planetenbolzens und des darauf gelagerten Planeten eine Verklemmung im Zahneingriff zwischen Planeten und Sonnenrad und/oder dem Hohlrad entsteht, wobei die mindestens eine exzentrische Bohrung (5) einen größeren Durchmesser (D) als die übrigen Bohrungen (2, 3, 4) aufweist, und/oder als Langloch ausgebildet ist, wobei der in der mindestens einen exzentrischen Bohrung (5, 5a, 5b) angeordnete Planetenbolzen (8) elastisch und/oder dämpfend gelagert ist, wobei der Planetenbolzen (8) über elastisch verformbare Ringe (7a, 7b, 9) gegenüber der exzentrischen Bohrung (5, 5a, 5b) abgestützt ist.

2. Planetengetriebe nach Anspruch 1, **dadurch gekennzeichnet, dass** die Planetenbolzen (8) beidseitig in einer ersten Bohrung (5a) und einer zweiten, koaxial angeordneten Bohrung (5b) im Planetenträger (1) abgestützt sind.

3. Planetengetriebe nach einem der vorigen Ansprüche, **dadurch gekennzeichnet, dass** in der mindestens einen exzentrischen Bohrung (5, 5a, 5b) Ringnuten (6a, 6b) zur Aufnahme der elastischen Ringe (7a, 7b, 9) angeordnet ist.

4. Planetengetriebe nach einem der vorigen Ansprüche, **dadurch gekennzeichnet, dass** zwischen dem Planetenbolzen (8) und der mindestens einen exzentrischen Bohrung (5) ringförmige Federdämpfungsglieder (7a, 7b) angeordnet ist.

5. Planetengetriebe nach Anspruch 4, **dadurch gekennzeichnet, dass** das Federdämpfungsglied als Rundschnurring (7a, 7b) aus einem elastomeren Material ausgebildet ist.

6. Planetengetriebe nach Anspruch einem der vorigen Ansprüche, **dadurch gekennzeichnet, dass** der elastische Ring als metallisches Radial-Wellfeder-Element (9) ausgebildet ist.

7. Schwenkmotor eines aktiven Wankstabilisators für ein Kraftfahrzeug, umfassend einen Elektromotor und ein vom Elektromotor antreibbares Planetengetriebe, **dadurch gekennzeichnet, dass** das Planetengetriebe nach einem der Ansprüche 1 bis 6 ausgebildet ist.

## Claims

1. Planetary transmission, comprising a planetary carrier (1), at least three planetary gears which are mounted on planet journals (8), an internal gear and a sun gear, the planetary carrier (1) having bores (2, 3, 4) which are arranged on a common hole circle (k) with regular centre points (O) which are distributed uniformly over the circumference for receiving the planet journals (8), **characterized in that** at least one bore is configured as an eccentric bore (5), the eccentric centre point (M) of which is arranged offset in the radial and/or tangential direction with respect to the regular centre point (O), in such a way that jamming in the tooth engagement between the planets and the sun gear and/or the internal gear is produced by way of the eccentric arrangement of the at least one bore (5), a planet journal and the planet which is mounted on the latter, the at least one eccentric bore (5) having a greater diameter (D) than the remaining bores (2, 3, 4), and/or is configured as a slot, the planet journal (8) which is arranged in the at least one eccentric bore (5, 5a, 5b) being mounted in an elastic and/or damping manner, the planet journal (8) being supported via elastically deformable rings (7a, 7b, 9) with respect to the eccentric bore (5, 5a, 5b).

2. Planetary transmission according to Claim 1, **characterized in that** the planet journals (8) are supported on both sides in a first bore (5a) and a second, coaxially arranged bore (5b) in the planetary carrier (1) .

3. Planetary transmission according to either of the preceding claims, **characterized in that** annular grooves (6a, 6b) for receiving the elastic rings (7a, 7b, 9) are arranged in the at least one eccentric bore (5, 5a, 5b).

4. Planetary transmission according to one of the preceding claims, **characterized in that** annular spring damping members (7a, 7b) are arranged between the planet journal (8) and the at least one eccentric bore (5).

5. Planetary transmission according to Claim 4, **characterized in that** the spring damping member is configured as a round section ring (7a, 7b) made from an elastomer material.

6. Planetary transmission according to claim one of the preceding claims, **characterized in that** the elastic ring is configured as a metallic radial corrugated spring element (9).

7. Swivel motor of an active role stabilizer for a motor vehicle, comprising an electric motor and a planetary transmission which can be driven by the electric motor, **characterized in that** the planetary transmission is configured according to one of Claims 1 to 6.

## Revendications

1. Boîte de vitesses à trains épicycloïdaux, comprenant un porte-satellite (1), au moins trois roues planétaires montées sur des axes de satellites (8), une couronne ainsi qu'une roue solaire, le porte-satellite (1) présentant des alésages (2, 3, 4) disposés sur un cercle de trous (k) commun et ayant des centres réguliers (O) répartis uniformément sur la circonférence pour recevoir les axes de satellites (8),
**caractérisée en ce qu'**au moins un alésage est réalisé sous forme d'alésage excentrique (5) dont le centre excentrique (M) est décalé dans la direction radiale et/ou tangentielle par rapport au centre régulier (O) de sorte que la disposition excentrique de l'au moins un alésage (5), d'un axe de satellite et de la roue planétaire montée sur celui-ci crée un blocage dans l'engrènement entre les roues planétaires et la roue solaire et/ou la couronne, ledit au moins un alésage excentrique (5) présentant un diamètre (D) plus grand que celui des autres alésages (2, 3, 4), et/ou étant réalisé sous forme de trou oblong, l'axe de satellite (8) disposé dans ledit au moins un alésage excentrique (5, 5a, 5b) étant monté de manière élastique et/ou amortissante, l'axe de satellite (8) étant supporté par l'intermédiaire d'anneaux à déformation élastique (7a, 7b, 9) par rapport à l'alésage excentrique (5, 5a, 5b).

2. Boîte de vitesses à trains épicycloïdaux selon la revendication 1, **caractérisée en ce que** les axes de satellites (8) sont supportés des deux côtés dans un premier alésage (5a) et dans un deuxième alésage (5b) disposé coaxialement dans le porte-satellite (1).

3. Boîte de vitesses à trains épicycloïdaux selon l'une quelconque des revendications précédentes, **caractérisée en ce que** dans ledit au moins un alésage excentrique (5, 5a, 5b), des rainures annulaires (6a, 6b) sont disposées pour recevoir les anneaux élastiques (7a, 7b, 9).

4. Boîte de vitesses à trains épicycloïdaux selon l'une quelconque des revendications précédentes, **caractérisée en ce que** des éléments amortisseurs à ressort annulaires (7a, 7b) sont disposés entre l'axe de satellite (8) et ledit au moins un alésage excentrique (5).

5. Boîte de vitesses à trains épicycloïdaux selon la revendication 4, **caractérisée en ce que** l'élément amortisseur à ressort est réalisé sous la forme d'un joint torique (7a, 7b) en matériau élastomère.

6. Boîte de vitesses à trains épicycloïdaux selon la revendication l'une quelconque des revendications précédentes, **caractérisée en ce que** l'anneau élastique est réalisé sous la forme d'un élément formant rondelle ondulée radiale (9) métallique.

7. Moteur pivotant d'une barre antiroulis active pour un véhicule automobile, comprenant un moteur électrique et une boîte de vitesses à trains épicycloïdaux pouvant être entraînée par le moteur électrique, **caractérisé en ce que** la boîte de vitesses à trains épicycloïdaux est réalisée selon l'une quelconque des revendications 1 à 6.
